Europäisches Patentamt

European Patent Office

Office européen des brevets

(11) Publication number: **0 229 101**
**B1**

# EUROPEAN PATENT SPECIFICATION

(45) Date of publication of patent specification: **25.07.90**

(51) Int. Cl.⁵: **G 07 F 7/08**

(21) Application number: **86903709.3**

(22) Date of filing: **18.06.86**

(86) International application number:
**PCT/SE86/00297**

(87) International publication number:
**WO 86/07647 31.12.86 Gazette 86/28**

(54) AN ARRANGEMENT FOR MAKING PAYMENTS BY CREDIT CARD.

<table>
<tr>
<td>

(30) Priority: **18.06.85 SE 8503039**

(43) Date of publication of application:
**22.07.87 Bulletin 87/30**

(45) Publication of the grant of the patent:
**25.07.90 Bulletin 90/30**

(84) Designated Contracting States:
**AT BE CH DE FR GB IT LI LU NL**

(56) References cited:
**none**

</td>
<td>

(73) Proprietor: **STORVIGGEN AB**
**Box 7168**
**S-103 88 Stockholm (SE)**

(72) Inventor: **ESKILSSON, Birger**
**Mörbyleden 20**
**S-182 32 Danderyd (SE)**
Inventor: **JACOBSEN, Hans**
**Lyckostigen 20A**
**S-183 50 Täby (SE)**
Inventor: **WESTERBERG, Gerhard**
**Danderydsvägen 36**
**S-182 65 Djursholm (SE)**

(74) Representative: **Örtenblad, Bertil Tore**
**Noréns Patentbyra AB Box 27034**
**S-102 51 Stockholm (SE)**

</td>
</tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to an arrangement for making payments by credit card or charge card, such arrangements or apparatus being known as apparatus for Electronic Funds Transfer at Point of Sale (EFTPOS).

The practice of paying for goods in stores, supermarkets etc. by credit card, bankers card or charge card, hereinafter referred to as a credit card, is becoming more and more usual.

This more general use of credit cards, however, has created in the main two problems.

One problem is that it takes longer to pay by credit card than to pay cash. When providing credit card payment facilities it is necessary to provide each cash point with a device with which a print can be made of the card tendered in payment. The task of preparing and using this device is both time consuming and laborious.

It is also necessary for the till operator or cash point operator to check whether the credit card tendered has been blocked or not. The till operator is also required to fill in a counterfoil slip, onto which a print is taken from the card.

The other problem is that the till operator is not able to check whether the account to which the credit card applies has sufficient means to cover the cost of the goods purchased or services rendered. When the credit limit of a credit card is exceeded, problems are created for the respective credit card finance companies or like bodies responsible for the card.

The present invention offers a solution to the handling problems associated with credit card payments, or EFTPOS, of which problems the two mentioned above are the most common.

Thus, the present invention relates to an arrangement for making payments with a credit card, including a card reader, a keyboard for entering the sum required and possibly a personal code number, a display, a printer, and a microprocessor which is connected to a memory and is arranged to control the display and to receive from the card reader a signal related to the account for which the card is made out and optionally to other information read from the card, and which is also arranged to control the printer, the microprocessor being arranged for connection to a bank computer and/or to the computer of a credit card financing company, in order to debit the account concerned, the arrangement being characterized in that the microprocessor includes a random number generator or a corresponding program; in that there is provided a further keyboard at one or more cash sale points; in that the microprocessor is arranged to store said signals from the card reader in the memory in pairs with a number generated by the random number generator and in conjunction therewith to instruct the printer to print out a record slip or receipt on which, inter alia, the sum and number involved are printed; and in that the microprocessor is arranged to receive a signal from one of said further keyboards corresponding to said number, wherewith upon receipt of such a signal the microprocessor is arranged to make a comparison between this signal and the combinations of the sums and numbers stored pairwise in the memory and when said number is found present in the memory to send a signal to the computer of said bank or credit card company instructing the computer to debit the account associated with said sum.

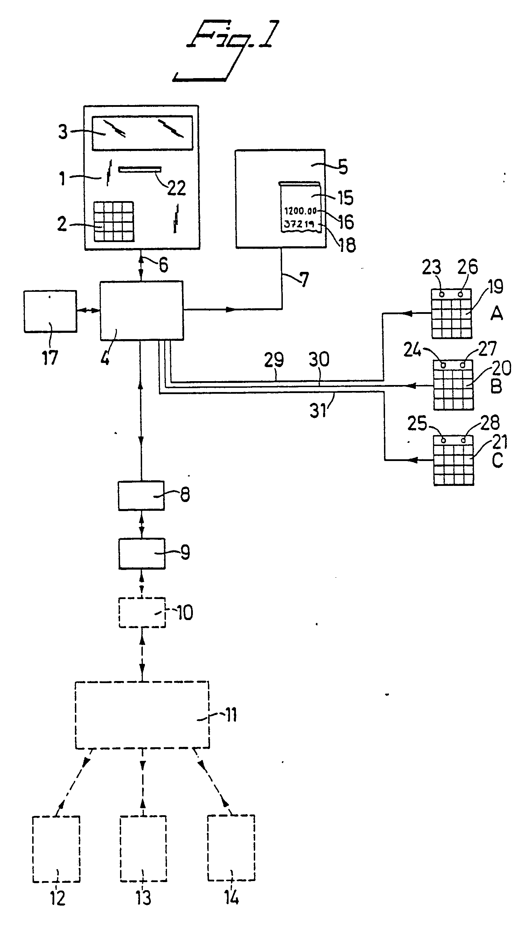

The invention will now be described in more detail with reference to an exemplifying embodiment thereof illustrated in the accompanying drawing, which is a block schematic of an arrangement incorporating the invention.

The single figure of the drawing is a block schematic of an arrangement according to the invention for making credit card payments, or electronic fund transfers at point of sale, in stores, supermarkets, air terminals, and like places where at least one till operator or cash point operator is available to take payment for the goods purchased or services rendered. The arrangement includes a card reader 1, a keyboard 2 for entering the sum required and optionally also a personal code number, possibly together with further information, a display 3 for displaying, inter alia, the data entered on the keyboard 2, and a microprocessor 4 and a printer 5.

The microprocessor 4 is programmed to control the display 3 in a manner which, inter alia, reproduces on the display the data entered on the keyboard 2 and also information as to whether or not the microprocessor has accepted the card read by the card reader and to whether the sum involved can be accepted or not.

The microprocessor 4 is arranged to receive from the card reader 1, on line 6, a signal which relates to the account for which the credit card is issued and optionally also to other data read from the card. The credit card is suitably of the kind provided with a magnetic tape in which readable information or data is stored.

This optional additional data or information may have the form of a personal code, a maximum permitted credit limit per calendar day, or a debiting occasion, etc.

The microprocessor 4 is also constructed to cause the printer 5 to print out certain data or information, via the line 7.

The microprocessor 4 is connected in a known manner, via the telephone network, or in another corresponding manner, to computers which process the account on which the card is issued, such as a bank computer or the computer of a credit card financing company, in order to establish what funds are available on the account, and in order to debit the account. To this end, the arrangement includes a so-called scrambler 8 and a modem 9 for connection to the telephone network.

In the drawing, the reference numeral 10 indicates a modem of, for example, a bank, while the reference numeral 11 indicates a bank computer and the reference numerals 12, 13, 14 indicate respective computers of other institutions, such as different credit card financing companies with which the bank cooperates. Naturally, the reference numeral 11 may instead indicate a coordinating computer of the credit card company, and the reference numerals 12, 13, 14 may indicate banks and/or other credit card companies.

The microprocessor 4 is also programmed to instruct the printer 5 to print-out the sum required on a receipt or record slip 15, among other things. This sum is exemplified as SEK 1200:- in the drawing and is referenced 16.

The arrangement hitherto described is known to a large extent. When the reference 11 is considered to identify the computer of a bank, the arrangement described hitherto can be considered to constitute an arrangement for dispensing cash against a tendered credit card, namely a so-called bankomat (registered trademark) or an autobank, which are to be found outside a large number of banks and at other locations. In the case of cash points of this kind, the account to be charged is determined in the bankomat, whereafter the sum required, if found acceptable, is dispensed through the bankomat dispenser in banknote form. If requested to do so, a printer will issue a record of the transaction made.

The use of a cash dispenser in a store or supermarket has an obvious and serious drawback, namely that a very large amount of cash must be available. One advantage among many with the increased use of the credit card system is that less ready cash need be made available.

A RAM-type memory 17 is connected to the microprocessor 4.

In addition, the microprocessor 4 incorporates a random number generator or is correspondingly programmed to generate random numbers.

The microprocessor 4 is also arranged to store in the memory 17 the aforesaid signals from the card reader 1 together with a number generated by the random number generator. By "together" is meant that at least the sum required inserted through the keyboard 2 shall be stored in the memory 17 pairwise with a randomly generated number.

In conjunction with the procedure of storing the sum and number pairwise in the memory, the microprocessor instructs the printer to print-out a record slip on which, inter alia, the sum 16 and a number, 18, is printed.

According to the invention, the arrangement includes a further keyboard 19, 20, 21 in one or more till points or cash points A, B and C, these keyboards 19, 20, 21 being connected to the microprocessor 4.

In accordance with a first embodiment, the further keyboards 19, 20, 21 are intended to be used for entering the number 18 printed on the record slip 15 by the printer 5. When the microprocessor 4 receives from one of the further keyboards 19, 20, 21 a signal which corresponds to a number-related signal, the microprocessor compares this signal with the pairwise combinations of sum and number stored in the memory 17.

When the number to which the signal relates is found in the memory 17, the microprocessor is programmed to send a signal over line 8, 9, 10 to the computer 11-14 of a bank or a credit card financing company instructing the computer to debit the account to which said sum relates.

One or more card readers 1, keyboards 2, displays 3 and printers 5, to which customers may turn in order to obtain a record slip, or receipt 15, at any time during their stay on the purchasing premises, is or are placed centrally in a store, supermarket or like establishment.

Thus, the customer approaches the card reader and inserts his/her card in a slot 22 herefor, and then enters the sum required, and optionally a personal code, through the keyboard 2.

In accordance with a preferred procedure, the microprocessor is programmed to check whether or not the account for which the card has been issued has sufficient means to cover the transacted sum, this check being made in a known manner through communication with the computer 11-14 of a bank and/or a credit card financing company.

According to a first embodiment, the microprocessor is programmed to first make this check and then to instruct the printer 5 to issue a record slip 15, as described above, provided that sufficient funds are available.

A printer 5 of this kind is inexpensive and simple and the text produced can thus be readily falsified. Consequently, it would be quite inadequate for the record or transaction slip simply to show the sum involved. This would make it easy to forge or falsify a record slip.

Because there is recorded on the record slip a number which has been selected at random, this number being purely a numerical number or any alpha-numerical character sequence whatsoever, and because the combination of sum and number is stored in the memory 17, when the number is entered through one of the keyboards 19, 20, 21 the microprocessor is able to ascertain the authenticity of the number by checking that this number has actually been printed by the printer 5.

According to a second embodiment, the keyboards 19, 20, 21 are intended to be used for entering the number 18 and the sum 16 recorded on the slip 15 printed by the printer 5.

According to this embodiment, the microprocessor is therefore constructed to make a comparison between the signal received from a keyboard and combinations of pairs of sums and numbers stored in the memory 17, with respect to both sum and number.

In this embodiment, the microprocessor does not effect a debiting procedure until a comparison has been made and the aforesaid combination on the record slip has been shown to agree with an equivalent combination in the memory 17.

This embodiment thus enables the customer to change his/her mind, i.e. not to use the record slip, or receipt, as a means of payment.

In order to increase security against forgery or falsification still further, the microprocessor 4 is programmed to effect a debiting proceduring only when a signal is obtained from one of the further keyboards 19-21 within a preselected period of time from the time at which the printer 5 issued a record slip 15. This means that a printed record slip will be invalid after a given period of time has lapsed. A suitable time period in this regard is, e.g., one hour.

According to one preferred embodiment, the microprocessor 4 is constructed to compare the random number last generated with the numbers printed by the printer during the immediate preceding preselected time period, and in the event that this number has not been printed during said time period to print said number or otherwise to generate a new number and to compare this number with the numbers already printed.

In this way, each number and therewith each record or transaction slip becomes unique. Each record slip can therewith be said to constitute a valuable document possessing a relatively high security level, despite its simplicity.

According to a second embodiment, only a part of the aforesaid preselected time period is utilized to effect the necessary credit check. In this case the printer prints a record slip prior to carrying out a credit control through the computers 12-14. When it is found that sufficient funds are available to meet the transaction, data to this effect is stored in the memory together with the sum-number combination. This affords sufficient time for the check to be made without requiring the customer to wait. In certain cases, the time involved may reach several minutes.

When the number or the combination of sum and number entered through the keyboard 19-21 cannot be found in the memory 17, or have been stated in the memory as being invalid, the microprocessor is programmed to send an error signal to respective keyboards over lines herefor, this error signal activating a signalling device, e.g. a red lamp 23-25 on the keyboard. Thus, in this case the record slip is not valid as a means of payment.

The reason may be that not sufficient funds are available, that the number or alternatively the combination has, or have, not been printed on a record slip, or that there has not been time to carry out a credit check.

What is meant by a combination being given as invalid is that when insufficient funds are available to meet a transaction or when the aforesaid preselected time period has expired, the microprocessor is programmed to send to the memory a signal to the effect that this combination shall be considered as being invalid, this signal being coupled to the relevant combination in the memory.

Correspondingly, the keyboards 19-21 may be equipped with a green lamp 26-28 signifying that the record slip is a valid form of payment, these lamps being ignited by the microprocessor when it has found the combination entered through the keyboard 19-21. Before deciding how much money to withdraw, the customer estimates the total cost of his/her purchases. If the estimate is too low, the customer pays the difference in cash at the till point, whereas if the sum estimated is too high the difference is repaid at the till point.

The present invention thus solves the problems recited in the introduction.

The arrangement also affords practical and economical advantages. For example, the respective apparatus in which the arrangement is installed are situated remote from the cash registers used at the till points or sale points in the store etc., these cash registers varying widely in make and design. Should the cash register be used for direct credit control purposes of the kind for which the present invention is used, it would be necessary to provide each cash register with an appropriate interface for coupling the cash register to various computers from which information relating the amount of funds or means available can be collected. Such a system would be very expensive. In addition, it would be necessary for the customer to wait at the till point until it has been ascertained whether or not he/she is able to pay, whereas when using the concept of the present invention the customer is able to shop while the financial state of his/her account is being controlled.

The present invention can be readily installed at relatively low costs.

However, in certain cases it may be to advantage to use the keyboard of an existing cash register instead of installing a separate keyboard 19-21 described in the aforegoing. In this case the cash register is provided with connections to the microprocessor 4 corresponding to the connections 29-31 for the aforesaid keyboard, and also with control lamps corresponding to the aforesaid lamps 23-25; 26-28.

The illustrated exemplifying embodiment described above is not restrictive of the invention, but can be modified within the scope of the following claims.

## Claims

1. An arrangement for making credit card payments, including a card reader (1), a keyboard (2) for entering the sum required and optionally a personal code, a display (3), a printer (5), and a microprocessor (4) which is connected to a memory (17) and is arranged to control the display (3) and to receive from the card reader (1) a signal related to the account for which the card is issued and optionally to other information read from the card, and which is also arranged to control the printer (5), the microprocessor (4) being arranged for connection to a bank computer and/or to the computer of a credit card financing company, in order to debit the account concerned, characterized in that the microprocessor includes a random number generator or a corresponding program; in that there is provided a further keyboard (19-21) at one or more cash sale points or till points (A, B, C); in that the microprocessor (4) is arranged to store said signals received from the card reader in the memory (17) pairwise with a number generated by the random number generator and in conjunction therewith to instruct the printer (5) to print out a record slip or receipt (15) on which, inter alia, the sum (16) and number (18) involved are printed; and in that the microprocessor (4) is arranged to receive a signal from one of said further keyboards (19-21) corresponding to said number, wherewith upon receipt of such a signal the microprocessor (4) is arranged to make a comparison between this signal and the combinations of the sums and numbers stored pairwise in the memory (17) and when said number is found present in the memory (17) to send a signal to the computer of said bank or credit card company instructing the computer to debit the account associated with said sum.

2. An arrangement according to Claim 1, characterized in that the microprocessor (4) is arranged to receive from one of the further keyboards (19-21) a signal corresponding both to said sum and to said number, the microprocessor (4) being arranged, upon receiving said signal, to carry out said comparison with said sum and said number in combination with combinations of sums and numbers stored pairwise in the memory.

3. An arrangement according to Claim 1 or 2, characterized in that the microprocessor (4) is programmed to carry out said debiting procedure only when receiving a signal from said further keyboard (19-21) within a preselected time period subsequent to the record slip being printed by the printer (5).

4. An arrangement according to Claim 2 or 3, characterized in that the microprocessor (4) is programmed to compare the random number (18) last generated with the numbers generated during said preselected time period, and in the event that said last number has not been printed out during said time period to print said number or otherwise to generate a new number and compare this number with the numbers previously printed.

5. An arrangement according to Claim 1, 2, 3 or 4, characterized in that the further keyboard (19-21) is provided with indicating means (23-25; 26-28) which are activated by the microprocessor in a manner to indicate whether a pairwise sum and number combination entered through the keyboard (19-21) is found in the memory (17) of the microprocessor and is valid or invalid.

**Patentansprüche**

1. Anordnung zur Durchführung von Zahlungen mittels Kreditkarte, bestehend aus einem Kartenleser (1), einer Tastatur (2) zur Eingabe der verlangten Summe und wahlweise einem Personalcode, einem Sichtgerät (3), einem Drucker (5) und einem Mikroprozessor (4), der mit einem Gedächtnis (17) verbunden und angeordnet ist, das Sichtgerät (3) zu steuern und vom Kartenleser (1) ein Signal zu empfangen, das auf das Konto, für das die Karte ausgestellt ist, und wahlweise auf andere von der Karte gelesene Information bezogen ist, und der auch angeordnet ist, den Drucker (5) zu steuern, wo der Mikroprozessor (4) für Anschluß an einen Bankrechner und/oder den Rechner einer Kreditkartengesellschaft angeordnet ist, um das betreffende Konto zu belasten, dadurch gekennzeichnet, daß der Mikroprozessor einen Zufallszahlgenerator oder ein entsprechendes Programm enthält, daß an einem oder mehreren Barverkaufspunkten oder zu Punkten (A, B, C) eine weitere Tastatur (19—21) vorgesehen ist, dass der Mikroprozessor (4) angeordnet ist, genannte vom Kartenleser empfangene Signale paarweise im Gedächtnis (17) mit einer vom Zufallszahlgenerator erzeugten Zahl zu speichern und in Verbindung damit den Drucker (5) anzuweisen, einen Aufzeichnungszettel oder eine Quittung (15) auszudrucken, worauf u.a. die fragliche Summe (16) und Zahl (18) gedruckt sind, und daß der Mikroprozessor (4) angeordnet ist, von einer der genannten weiteren Tastaturen (19—21) ein genannter Zahl entsprechendes Signal zu empfangen, womit auf Empfang eines solchen Signals der Mikroprozessor (4) angeordnet ist, einen Vergleich zwischen diesem Signal und den Kombinationen der im Gedächtnis (17) paarweise gespeicherten Summen und Zahlen zu machen und, wenn genannte Zahl im Gedächtnis (17) vorhanden gefunden ist, ein Signal an den Rechner der genannten Bank oder Kreditkartengesellschaft zu senden, mit der Anweisung an den Rechner, das genannter Summe zugeordnete Konto zu belasten.

2. Anordnung nach Anspruch 1, dadurch gekennzeichnet, daß der Mikroprozessor (4) angeordnet ist, von einer der weiteren Tastaturen (19—21) ein sowohl genannter Summe als auch genannter Zahl entsprechendes Signal zu empfangen, und der Mikroprozessor (4) angeordnet ist, auf Empfang genannten Signals genannten Vergleich zwischen genannter Summe und genannter Zahl in Verbindung mit Kombinationen von paarweise im Gedächtnis gespeicherten Summen und Zahlen zu machen.

3. Anordnung nach Anspruch 1 oder 2, dadurch gekennzeichnet, daß der Mikroprozessor (4) programmiert ist, genannten Belastungsvorgang nur auszuführen, wenn er ein Signal von genannten weiteren Tastaturen (19—21) innerhalb eines vorgewählten Zeitraumes empfängt, nachdem dass der Aufzeichnungszettel von dem Drucker (5) gedruckt worden ist.

4. Anordnung nach Anspruch 2 oder 3, dadurch gekennzeichnet, daß der Mikroprozessor (4) programmiert ist, die zuletzt erzeugte Zufallszahl (18) mit den während des genannten vorgewählten Zeitraumes erzeugten Zahlen zu vergleichen, und daß, falls genannte letzte Zahl nicht während des genannten Zeitraumes ausgedruckt worden ist, genannte Zahl zu drucken oder sonst eine neue Zahl zu erzeugen und diese Zahl mit den vorher gedruckten Zahlen zu vergleichen.

5. Anordnung nach Anspruch 1, 2, 3 oder 4, dadurch gekennzeichnet, daß die weitere Tastatur (19—21) mit Anzeigemitteln (23—25; 26—28) versehen ist, die vom Mikroprozessor so betätigt werden, daß sie anzeigen, ob eine paarweise durch die Tastatur (19—21) eingegebene Summen und Zahl Kombination im Gedächtnis (17) des Mikroprozessors vorhanden und gültig oder ungültig ist.

**Revendications**

1. Agencement permettant d'effectuer des paiements par carte de crédit, comprenant un lecteur de carte (1), un clavier (2) destiné à entrer la somme demandée et éventuellement un code personnel, un dispositif d'affichage (3), une imprimante (5), et un microprocesseur (4) connecté à une mémoire (17), ce microprocesseur étant conçu pour commander le dispositif d'affichage (3) et recevoir du lecteur de carte (1) un signal concernant le compte pour lequel la carte est émise et éventuellement une autre information lue sur la carte, ainsi que pour commander également l'imprimante (5), le microprocesseur (4) étant également conçu pour être connecté à un ordinateur de banque et/ou à l'ordinateur d'une société de financement de cartes de crédit, de manière à débiter le compte concerné, agencement caractérisé en ce que le microprocesseur comprend un générateur de nombres aléatoires ou un programme correspondant; en ce qu'il est utilisé un clavier supplémentaire (19—21) en un ou plusieurs points de caisse ou points de vente (A, B, C); en ce que le microprocesseur (4) est conçu pour stocker les signaux reçus du lecteur de carte dans la mémoire (17) sous une forme appariée avec un nombre généré par le générateur de nombres aléatoires et en association avec celui-ci pour donner à l'imprimante (5) l'instruction d'imprimer une fiche d'enregistrement ou un reçu (15) sur lequel sont imprimés, entre autres, la somme (16) et le nombre (18) considérés; et en ce que le microprocesseur (4) est conçu pour recevoir de l'un de ces claviers supplémentaires (19—21) un signal correspondant à ce nombre, de façon qu'à la réception d'un tel signal le microprocesseur (4) soit conçu pour effectuer une comparaison entre ce signal et les combinaisons de sommes et de nombres stockées sous forme appariée dans la mémoire (17), et que, lorsqu'il est constaté que ce nombre est présent dans la mémoire (17), le microprocesseur émette un signal vers l'ordinateur de la banque ou de la société de cartes de crédit pour donner à cet ordinateur l'instruction de débiter le compte correspondant à cette somme.

2. Agencement selon la revendication 1, caractérisé en ce que le microprocesseur (4) est conçu pour recevoir de l'un des autres claviers (19—21) un signal correspondant à la fois à la somme et au nombre, le microprocesseur (4) étant conçu pour effectuer, à la réception de ce signal, la comparaison de la somme et du nombre associés avec les combinaisons de sommes et de nombres stockées sous forme appariée dans la mémoire.

3. Agencement selon l'une quelconque des revendications 1 et 2, caractérisé en ce que le microprocesseur (4) est programmé pour n'effectuer la procédure de débit que lorsqu'il a reçu un signal des autres claviers (19—21) dans une période de temps présélectionnée après que la fiche d'enregistrement ait été imprimée par l'imprimante (5).

4. Agencement selon l'une quelconque des revendications 2 et 3, caractérisé en ce que le microprocesseur (4) est programmé pour comparer le dernier nombre aléatoire généré (18) aux nombres générés pendant la période de temps présélectionnée, et, dans le cas dans lequel ce dernier nombre n'a pas été imprimé pendant cette période de temps, pour imprimer ce nombre ou générer de toute autre manière un nouveau nombre afin de comparer ce nombre aux nombres précédemment imprimés.

5. Agencement selon l'une quelconque des revendications 1 à 4, caractérisé en ce que l'autre clavier (19—21) est muni de moyens d'indication (23—25; 26—28) déclenchés par le microprocesseur de manière à indiquer s'il se trouve dans la mémoire (17) du microprocesseur une combinaison d'une somme et d'un nombre appariés introduite par le clavier (19—21), et si cette combinaison est valide ou non valide.

*Fig.1*